# EUROPÄISCHE PATENTSCHRIFT

(11) **EP 2 524 799 B1**
(45) Veröffentlichungstag und Bekanntmachung des Hinweises auf die Patenterteilung: **05.06.2013**
(21) Anmeldenummer: 11166370.4
(22) Anmeldetag: 17.05.2011
(51) Int. Cl.: B32B 3/12, B32B 3/18, B32B 5/20, B32B 21/00

(54) **Verfahren zur Herstellung einer Wabenverbundplatte mit Kunststoffschaumeinsätzen für Befestigungsmittel**
Method for producing a composite honeycomb panel with plastic foam inserts for fixing means
Procédé de fabrication d'une plaque composite en nid d'abeille dotée d'inserts en mousse synthétique pour moyens de fixation

(43) Veröffentlichungstag der Anmeldung: 21.11.2012
(73) Patentinhaber: Falquon GmbH, 16928 Pritzwalk (DE)
(72) Erfinder:
(74) Vertreter: Morawski, Birgit

(56) Entgegenhaltungen:
- GB-A- 2 341 619

## Beschreibung

Die vorliegende Erfindung betrifft ein Verfahren zur Herstellung einer Wabenverbundplatte nach Anspruch 1, eine mit diesem Verfahren hergestellte Wabenverbundplatte nach Anspruch 11 und deren Verwendung nach Anspruch 15.

Bei der Herstellung von Möbeln ist die Frage der Gewichtsersparnis aus verschiedenen Gründen von besonderer Bedeutung. So ist es erstrebenswert, Ressourcen zu schonen, d.h. eine Einsparung der verwendeten Menge von Holz zur Herstellung des Holzwerkstoffes wie Spanplatten oder MDF-Platte ist wünschenswert. Dies hängt heute in starkem Maße mit der zunehmend geringeren Verfügbarkeit des Rohstoffes Holz zusammen. So steht Holz teilweise wegen der verstärkten Nutzung zur Energieerzeugung nicht mehr unbegrenzt zur Verfügung.

Auf der anderen Seite ist es wünschenswert auch aus ökologischen Gründen Gewicht einzusparen. Demnach sollte ein neues Produkt mit den gleichen Eigenschaften wie das Vorläuferprodukt einen geringeren Verbrauch von Rohstoffen gegenüber besagtem Vorläuferprodukt aufweisen. Ökologische Gründe sind auch beim Transport von großer Bedeutung, wo durch Gewichtsreduzierung ebenfalls Einsparungen hinsichtlich der Transportkosten möglich sind.

Insbesondere im gehobenen Einrichtungsbereich stehen jedoch dem Wunsch nach Gewichtseinsparung Entwicklungen im Design entgegen. So ist es erstrebenswert, Möbel bzw. Inneneinrichtungen mit Platten herzustellen, die deutlich höhere Stärken besitzen, da höhere Materialstärken dem Kunden einen höheren Wert vermitteln. Aus diesem Grund ist man auch in der Möbelindustrie dazu übergegangen, so genannte Leichtbauplatten oder Wabenplatten einzusetzen.

Die Verwendung von Leichtbauplatten wie z.B. in Form von Wabenverbundplatten in der Möbelindustrie und im Innenausbau ist hinlänglich bekannt. Haupteinsatzgebiet von Leichtbauplatten ist hier speziell der Türenbau. So ist es bei Zimmertüren üblich, ein Rahmenelement mit einem Wabenkern zu beplanken und dieses dann mit den entsprechenden Bohrungen, Fräsungen etc. zu einem Türelement weiterzuverarbeiten. Insbesondere werden bei der Herstellung von Zimmertüren Holzwerkstoffrahmen auf dünne Holzwerkstoffplatten aufgeklebt. In den Innenbereich des Rahmens wird nachfolgend eine Papierwabe eingeklebt und dieser Aufbau wird dann von oben mit einer weiteren dünnen Platte abgedeckt. Der Rahmen wird unter anderem zur Aufnahme der Scharniere und des Türschlosses benötigt. Da Letztere nachträglich in Handarbeit in den Rahmen eingefügt werden müssen, ist dieses Verfahren entsprechend umständlich und kostenintensiv.

Aus diesem Grund ist man dazu übergegangen, statt eines massiven Rahmens nur noch so genannte Stützkanten einzusetzen. Ausgangspunkt ist dabei ein so genanntes Rohfix-Maß, das lediglich aus den beiden Decklagen aus dünnen Holzwerkstoffplatten und einer Papierwabe als Mittellage besteht. In die Außenkanten dieses Aufbaus bzw. Rohfix-Maßes wird eine Ausnehmung eingefräst, in welche dann eine so genannte Stützkante eingeleimt bzw. eingeklebt wird. Diese Stützkante kann eine Stärke von einigen Millimetern aufweisen (DE 91 07 431 U1).

Als Stützkante können Furniere oder thermoplastische Kunststoffbänder fungieren. Auf diese Stützkante wird dann die eigentliche dekorative Kante aufgeklebt. Speziell für dieses System entwickelte Dübel und Befestigungsmittel ermöglichen den Einsatz dieser Möbelteile für diverse Inneneinrichtungen.

Ein ähnliches Problem ergibt sich bei Topfbändern, die nicht in der Schmalfläche der Platten sondern unmittelbar in den dekorativen Flächen befestigt werden müssen. Auch hier ist die Entwicklung von speziellen Befestigungssystemen notwendig, so dass trotz der realisierten Gewichtsersparnis derartige Systeme immer noch recht komplex und aufwändig in ihrer Herstellung sind.

Eine weitere Möglichkeit zur Gewichtsreduzierung und gleichzeitigen Erhöhung der Festigkeit und Isolierfähigkeit von Wabenplatten besteht in der Verwendung von Kunststoffschäumen. So wird in der EP 1 295 713 B1 ein Isolationsmaterial bestehend aus einer Wabenverbundplatte beschrieben, wobei die einzelnen Zellen des Wabenkerns jeweils mit einem Kunststoffschaum versehen sind.

Aus der DE 10 2007 039140 A1 ist die Verwendung von Kunststoffen bzw. Kunststoffschäumen zur Verstärkung von Schnittkantenverschlüssen von Wabenplatten bekannt. Dabei werden die Wabenplatten mit einem Kantenband im Schnittkantenbereich versehen, wobei die Rückseite des Kantenbandes mit einer Verstärkungsschicht z.B. aus Kunststoffen oder Kunststoffschäumen zur Erhöhung der Biegefestigkeit versehen wird.

Bei dem bisher konventionell verwendeten Wabenplatten stellt die Anbringung von Befestigungsmitteln wie Dübel oder Scharniere nach wie vor ein technisches Problem dar, wodurch eine effektive kontinuierliche Herstellung von Wabenplatten für die Möbelindustrie erschwert wird.

Der vorliegenden Erfindung liegt daher die Aufgabe zu Grunde, die mit der Verankerung von Befestigungsmitteln in und an der Wabenplatte verbundenen Probleme zu reduzieren bzw. zu eliminieren. Insbesondere ist es wünschenswert, den gesamten Herstellungsprozess technisch zu vereinfachen.

Diese Aufgabe wird erfindungsgemäß durch ein Verfahren zur Herstellung einer Wabenverbundplatte mit den Merkmalen des Anspruchs 1 gelöst.

Entsprechend umfasst das erfindungsgemäße Verfahren zur Herstellung einer Wabenverbundplatte mit Kunststoffschaumeinsätzen für Befestigungsmittel die folgenden Schritte:
a) Bereitstellen von mindestens einer ersten Holzwerkstoffplatte bzw. einer ersten Decklage,
b) Auftragen einer ersten klebstoffhaltigen Schicht auf mindestens eine Oberfläche der ersten Holzwerkstoffplatte,
c) Auflegen von mindestens einem Wabenkern auf die mit der klebstoffhaltigen Schicht versehene Oberfläche der ersten Holzwerkstoffplatte und Verkleben des Wabenkernes mit der ersten Holzwerkstoffplatte,
d) Einbringen einer einen Kunststoffschaum ausbildenden Zusammensetzung ausschließlich in mindestens einem räumlich begrenzten und markierten Bereich des Wabenkerns,
e) Auftragen einer zweiten klebstoffhaltigen Schicht auf die freie Oberfläche des Wabenkerns,
f) Auflegen von mindestens einer zweiten Holzwerkstoffplatte bzw. zweiten Decklage auf die mit der zweiten klebstoffhaltigen Schicht versehenen Oberfläche des Wabenkerns, und
g) Aushärten und Konfektionieren der Wabenverbundplatte.

Gemäß dem erfindungsgemäßen Verfahren wird die Zusammensetzung zur Ausbildung des Kunststoffschaums nur in die Bereiche des Wabenkerns eingetragen, die zur späteren Verankerung von Befestigungsmitteln in oder an der Wabenverbundplatte dienen. Der ausgehärtete Kunststoffschaum bildet somit die Einsätze, in die anschließend das gewünschte Befestigungsmittel oder weitere Elemente eingefügt bzw. eingebracht werden können.

Es ist also kein zusätzlicher Rahmen um den Wabenkern notwendig, der der Anbringung von Befestigungsmitteln dient, wodurch sowohl eine Ersparnis an Ausgangprodukten wie Holz als auch an Gewicht erreicht wird. Insgesamt ermöglicht das vorliegende Verfahren eine Vereinfachung der Befestigungstechnologie für Wabenverbundplatten und eine vollautomatische Herstellung von Wabenverbundplatten.

Bevorzugterweise wird an mehr als einem markierten bzw. vordefinierten Bereich des Wabenkerns die den Kunststoffschaum ausbildende Zusammensetzung eingetragen, so dass die Ausbildung von mehr als einem Kunststoffeinsatz zum Anbringen von Befestigungsmitteln oder weiteren Elementen an der Wabenverbundplatte möglich ist.

Die Markierung der Bereiche, in die die den Kunststoffschaum ausbildende Zusammensetzung einzutragen ist, erfolgt mittels bekannter Verfahren z.B. manuell, Computer- oder Lasergesteuert.

Da bei der Herstellung von Wabenplatten für Möbel im Wesentlichen mit sogenannten Rastermassen gearbeitet wird, wird bereits bei der Herstellung von großformatigen Wabenplatten festgelegt, an welcher Stelle später die Befestigungs- oder Verankerungselemente angebracht werden sollen, so dass bereits zu diesem Zeitpunkt bekannt ist, an welcher Stelle später Sägeschnitte vorgenommen werden sollen. Bereits vor der Herstellung ist somit bekannt, wo die erforderlichen Einsätze in Form des Kunststoffschaums in der Wabenverbundplatte sinnvollerweise eingebracht werden müssen. In einer Ausführungsform ist der mindestens eine markierte Bereich des Wabenkerns zum Einbringen der den Kunststoffschaum ausbildenden Zusammensetzung an den Kanten, den Ecken und/oder in der Mitte des Wabenkerns angeordnet. Die sich aus dem Kunststoffschaum bildenden Einsätze können somit je nach späterem Verwendungszweck der Wabenverbundplatte gezielt an den Stellen vorgesehen werden, an denen die notwendigen bzw. gewünschten Befestigungselemente für die jeweiligen Möbelteile anzubringen sind.

In einer weiteren Ausführungsform kann der mindestens eine markierte bzw. vordefinierte Bereich des Wabenkerns zum Eintragen der den Kunststoffschaum ausbildenden Zusammensetzung mittig an mindestens einer Kante des Wabenkerns und/oder an einer beliebigen anderen Position entlang der mindestens einen Kante des Wabenkerns vorgesehen sein. So kann eine mittige Anordnung eines sich aus dem Kunststoffschaum bildenden Einsatzes an einer Kante eines Wabenkerns zur späteren Aufnahme eines Schlüsselkastens für eine Zimmer- oder Schranktür dienen.

Wird der Kunststoffschaum an einer oder mehreren beliebigen anderen Positionen entlang einer oder mehrerer Kanten des Wabenkerns eingetragen, können die sich daraus bildenden Einsätze zur Aufnahme bzw. Befestigung von Dübeln, Schrauben oder Scharnieren, wie. z.B. Türscharnieren dienen. Die Ausbildung eines Einsatzes aus Kunststoffschaum unmittelbar in der Mitte oder dem Zentrum des Wabenkerns kann das Anbringen von Topfbändern bewirken. Die Position des Einsatzes geeignet zum Einbringen von Topfbändern im Wabenkern kann aber auch an jeder beliebigen Stelle innerhalb des Wabenkerns vorgesehen sein, da üblicherweise im Herstellungsprozess von größeren Formaten ausgegangen wird, aus denen im Anschluss jeweils kleinere Formate geschnitten werden.

In einer weiteren Ausführungsform sind mindestens vier markierte bzw. vordefinierte Bereiche des Wabenkerns zum Eintragen der den Kunststoffschaum ausbildenden Zusammensetzung an den jeweiligen Ecken des Wabenkerns vorgesehen. Die sich daraus ergebenden Einsätze aus Kunststoffschaum können zum Befestigen von weiteren Elementen wie z.B. Tischbeinen an der Wabenverbundplatte dienen.

In einer bevorzugten Ausführungsform weist der mindestens eine markierte bzw. vordefinierte Bereich des Wabenkerns zum Eintragen der den Kunststoffschaum ausbildenden Zusammensetzung eine Länge und Breite von jeweils 1 bis 15 cm, bevorzugt 3 bis 10 cm, insbesondere bevorzugt von 5 bis 8 cm auf. Diese räumlichen Angaben sind jedoch beliebig in Abhängigkeit des zu fertigenden Möbelstückes und den damit verbundenen Anforderungen an Befestigungsmittel und/oder weitere Elemente adaptierbar bzw. variierbar. Das vorliegende Verfahren ermöglicht somit eine rasche und unkomplizierte Anpassung an Kundenwünsche.

Auch ist die räumliche Dimension oder dreidimensionale Ausdehnung der später nach Ausbildung des Kunststoffes als Einsätze zur Aufnahme von diversen Elementen verwendeten Bereiche abhängig von der geometrischen Form des Wabenkerns bzw. von dessen einzelnen Zellen. Somit kann ein Einsatz durchaus eine hexagonale oder ovale dreidimensionale Form bzw. Dimension aufweisen. Die Wahl der Geometrie der Zellen des Wabenkerns hängt letztendlich von dem anvisierten bzw. angestrebten Verwendungszweck ab.

In einer besonders bevorzugten Ausführungsform kann als die den Kunststoffschaum ausbildende Zusammensetzung eine Zusammensetzung verwendet werden, die mindestens ein Isocyanat und mindestens ein Polyol umfasst. Während des Aushärtungsprozesses reagieren die beiden Komponenten unter Ausbildung des bekannten Polyurethan(PUR)-schaums.

Als geeignete Isocyanate werden im Rahmen der vorliegenden Erfindung bevorzugt aliphatische, acyclische oder aromatische Mono-, Di- oder Triisocyanatverbindungen verwendet. Die zum Einsatz kommenden Isocyanate sind bevorzugt ausgewählt aus der Gruppe enthaltend 2,4-Toluendiisocyanat, 2,6- Toluendiisocyanat, Diphenylmethan-4,4'-diisocyanat, Xylendiisocyanat, Hexamethylendiisocyanat, Dicyclohexylmethan-4,4'-diisocyanat und Triphenylmethantriisocyanat.

Die Eigenschaften des Kunststoffschaums werden im Wesentlichen durch die Polyolkomponente bestimmt. So können in Abhängigkeit von der Kettenlänge und Anzahl der Verzweigungen im Polyol mechanische Eigenschaften beeinflusst werden. Bevorzugterweise werden Polyesterpolyole und/oder Polyetherpolyole als Polyolkomponente verwendet. Wird ein Gemisch aus Polyesterpolyolen und Polyetherpolyolen verwendet, so führt dies zu besserer Standfestigkeit, weil Polyesterpolyole einen höheren Schmelzpunkt haben und somit beim Applizieren des Polyurethans erstarren. Die verwendete Polyolkomponente kann gezielt derart ausgewählt werden, so dass starre kleinporige Schäume entstehen, die eine gute Fixierung bzw. Verklebung von Befestigungsmitteln wie z.B. Dübel ermöglichen.

Die Ausbildung und das Aufschäumen des Polyurethanschaums werden durch Zugabe von Wasser hervorgerufen. Bei der Reaktion von Wasser mit Isocyanat wird Kohlenstoffdioxid abgespalten, welches den Schaum auftreibt. Durch die Menge des zugegebenen Wassers kann das Raumgewicht des entstehenden Schaums variiert werden. Typische Dichten des Kunststoffschaums sind im vorliegenden Fall 20 bis 90 kg/m³, bevorzugt 30 bis 60 kg/m³ für harten Blockschaum.

Es ist somit möglich durch die Wahl der verwendeten Komponenten Isocyanat und Polyol und deren Mischungsverhältnis die mechanischen Eigenschaften des Schaums wie z.B. Festigkeit gezielt einzustellen. So können bei entsprechender Auswahl Kunststoffschäume hergestellt werden, die eine Fixierung von schweren Bauteilen wie z.B. Türen oder Fenster ermöglichen. Auch ist durch gezieltes Einbringen von Gasen die Ausbildung einer Schaumstruktur mit entsprechender variabler Dichte möglich. Dies eröffnet die Möglichkeit, die Wabenverbundplatten mit Befestigungsmitteln für beliebige Möbelteile herzustellen.

Neben den beschriebenen Kunststoffschäumen können auch andere Klebstoffsysteme verwendet werden, die entweder bei der Aushärtung unter Volumenvergrößerung bzw. Aufschäumen abreagieren oder durch Verarbeitung unter Zugabe von Gasen eine Schaumstruktur ausbilden, die auch nach Aushärtung im wesentlichen erhalten bleibt. Weitere geeignete Klebstoffsysteme sind z.B. selbstaufschäumende Isocyanat/Wasser Systeme, Polyvinylacrylate oder Polyolefine, bei denen Gas als Schaummittel zugesetzt wird.

Bevorzugterweise wird ein Wabenkern verwendet, der eine Vielzahl von einzelnen Zellen, bevorzugt in hexagonaler Form aufweist. In einer Ausführungsform liegt der mindestens eine Wabenkern in Form einer Papierwabe, einer Kartonwabe, einer Aluminiumwabe oder einer aus Kunststoff hergestellten Wabe vor. Der zum Einsatz kommende Wabenkern weist bevorzugt eine rechteckige oder quadratische Form auf, kann jedoch selbstverständlich auch je nach Kundenwünschen jede andere Form wie z.B. eine ovale oder runde Form aufweisen.

Das Auftragen oder Applizieren der den Kunststoffschaum bildenden Zusammensetzung auf bzw. in den Wabenkern kann punktuell oder in Form einer Linie erfolgen. Das Einbringen der den Kunststoffschaum ausbildenden Zusammensetzung erfolgt bevorzugt von oben in die einzelnen Waben der markierten bzw. vordefinierten Bereiche des Wabenkerns. Nach Aushärtung kann der Kunststoffschaum die einzelnen Waben bis zu 93% ausfüllen. Das Einbringen der kunstoffschaumbildenden Zusammensetzung kann z.B. in einem kontinuierlichen Verfahren mittels Düsen erfolgen. Hierzu kann z.B. ein Düsensystem mit Roboterarm verwendet werden. Auch ist es möglich, alternativ Düsen zum Einspritzen der Zusammensetzung zu verwenden, die sich an oder auf einem verfahrbaren Portal befinden bzw. angeordnet sind.

Die zweite klebstoffhaltige Schicht kann unmittelbar nach Eintragen der kunststoffbildenden Zusammensetzung in die Zellen des Wabenkerns gemäß Verfahrensschritt e) aufgetargen werden. Es ist aber auch möglich, zunächst das Aufschäumen und die anschließende Aushärtung des Kunstoffschaums abzuwarten, bevor mit den weiteren Verfahrensschritten des Klebstoffauftrags und des Auflegens der zweiten Holzwerkstoffplatte fortgefahren wird.

In einer weiteren Ausführungsform können als erste und zweite Holzwerkstoffplatte eine Holzspanplatte oder eine Holzfaserplatte, insbesondere MDF-Platte, verwendet werden. Bevorzugterweise werden Holzwerkstoffplatten mit einer geringen Dicke bzw. geringem Gewicht zwecks Gewichts- und Materialersparnis eingesetzt.

In einer weiteren Ausführungsform kann die mindestens erste und/oder zweite klebstoffhaltige Schicht mindestens eine Klebekomponente und/oder mindestens einen Haftvermittler enthalten. Dabei kann die Klebekomponente ausgewählt sein aus einer Gruppe enthaltend Schmelzklebstoffe, Isocyanate und/oder modifizierte Silane.

Typische Schmelzklebstoffe sind acetathaltige Klebstoffe wie Ethylen-vinyl-actet (EVA), Styrol-Copolymer-Klebstoffe (PSA), Polyvinylacetat (PVAc) oder Polyolefin-Klebstoffe.

Die in der klebstoffhaltigen Schicht verwendeten Isocyanate entsprechen im Wesentlichen den für die Grundierung der Trägerplatte bzw. als Primer aufgelisteten IsocyanatVerbindungen. Die aufgeführten Isocyanatverbindungen können ebenfalls als Härtungsmittel dienen, da diese einen Nachvernetzungsprozess auslösen.

Typische modifizierte Silane, die als Klebekomponente verwendet werden können sind modifiziertes Silane, insbesondere alkoxysilylterminierte Silane wie z.B. Tetraethoxysilan. Methyltriethoxysilan, Octyltriethoxysilan, (3-Acryloyloxypropyl)trimethoxysilan oder 2-(7-Oxabicyclo[4.1.0]hept-3-yl)ethyl-trimethoxysilan. Weitere silanhaltige Klebekomponenten sind Pre-Polymere oder Polymere auf Silanbasis oder mit Silanen modifizierte Polymere, insbesondere ein modifiziertes Silan-Polymer (MS-Polymer), Silan-modifiziertes Polyurethan, Silan-modifizierte Polyester, Silan-modifizierte Polyacrylate oder Silan-modifiziertes Polyoxypropylen.

Darüber hinaus ist es von Vorteil, der ersten klebstoffhaltigen Schicht geeignete Härtungsmittel zu zusetzen. Als geeignete Härtungsmittel sind insbesondere starke oder schwache Säuren, wie zum Beispiel *p-*Toluensulfonsäure, Phosphorsäuren und deren Salze, substituierte und unsubstituierte Carbonsäuren geeignet.

Bei der späteren Weiterverarbeitung der mittels des vorliegenden Verfahrens hergestellten Warenverbundplatte können aus der großformatigen Warenverbundplatte einzelne Platten hergestellt werden, die mit einfachen Kanten versehen werden. Außerdem ermöglicht das vorliegende Verfahren die Herstellung von Wabenverbundplatten, die mit Befestigungsmitteln versehen werden können, die deutlich weniger aufwändig sind.

Ein weiterer positiver Aspekt des vorliegenden Verfahrens besteht darin, dass durch die gezielte, lokalisierte Verwendung von Kunststoffschäumen die Druckfestigkeit und Biegefestigkeit der Wabenverbundplatten gezielt verbessert werden können. Dies ist insbesondere für Wabenverbundplatten wichtig, die im späteren Verlauf für horizontale Anwendungen wie z.B. Regalbretter, Tischplatten, Arbeitsplatten etc. vorgesehen sind. Hier kann durch gezieltes Einbringen des Kunststoffschaums bzw. Klebstoffes verteilt über die Wabenverbundplatte eine kostengünstige Verbesserung erreicht werden.

Die Vorteile des vorliegenden Verfahrens bestehen somit in der Bereitstellung eines Verfahrens mit einer einfacheren und billigeren Bekantungstechnik, einfacheren und billigeren Befestigungstechnik und der Herstellung von Verbundplatten mit höherer mechanischer Belastbarkeit.

Eine gemäß dem vorliegenden Verfahren herstellbaren Wabenverbundplatte umfasst entsprechend mindestens eine erste Holzwerkstoffplatte, mindestens eine auf mindestens einer Oberfläche der ersten Holzwerkstoffplatte aufgetragene erste klebstoffhaltige Schicht, mindestens einen auf der mit der ersten klebstoffhaltigen Schicht versehenen Oberfläche der ersten Holzwerkstoffplatte angeordneten Wabenkern, einen ausschließlich in mindestens einem räumlich begrenzten, markierten bzw. vordefinierten Bereich des Wabenkerns eingetragenen Kunststoffschaum, mindestens eine auf der freien Oberfläche des Wabenkerns aufgetragene zweite klebstoffhaltige Schicht, und mindestens eine auf der mit der zweiten klebstoffhaltigen Schicht versehenen Oberfläche des Wabenkerns angeordnete zweite Holzwerkstoffplatte.

In einer Ausführungsform der vorliegenden Wabenverbundplatte ist der mindestens eine markierte bzw. vordefinierte Bereich des Wabenkerns umfassend den Kunststoffschaum an den Kanten, den Ecken und/oder in der Mitte des Wabenkerns und der Wabenverbundplatte angeordnet.

Bevorzugterweise dient der mindestens eine markierte bzw. vordefinierte Bereich des Wabenkerns umfassend den Kunststoffschaum der Aufnahme von Befestigungsmitteln wie z.B. Dübel oder Schrauben, Verbindungselementen wie z.B. Scharniere, Verschlusselementen wie z.B. Schlüsselkasten und anderen geeigneten Elementen wie z.B. Tischbeinen. Der Kunststoffschaum dient also als Einsatz zum Anbringen der besagten Mittel und/oder Elemente.

Es ist ebenfalls vorstellbar die Schmalseiten der Wabenverbundplatte, bevorzugterweise nach deren Zuschnitt, mit mindestens einem Kantenband zu versehen. Ein solches Kantenband dient dem Verschließen der Kanten der Wabenverbundplatte bestehend aus erster Holzwerkstoffplatte, des in vordefinierten Bereichen mit dem Kunststoffschaum versehen Wabenkerns und zweiter Holzwerkstoffplatte. Das Kantenband kann in Form einer dekorativen Kante, ggf. mit einer dünnen Verstärkungsschicht aus Kunststoff (Schaumband, Kunststoffschaum), biegefesten Material oder anderem hierfür geeigneten Material verwendet werden. Die bewirkt einen zusätzlichen Schutz der Wabenverbundplatte vor Durchbiegung.

Die vorliegende Wabenverbundplatte wird bevorzugt zur Herstellung von Inneneinrichtungen wie Möbeln, Türen oder Tischen verwendet.

Die Erfindung wird nachfolgend unter Bezugnahme auf die Figuren der Zeichnungen an einem Ausführungsbeispiel näher erläutert. Es zeigen:
- Figur 1: eine schematische Ansicht einer Ausführungsform des erfindungsgemäßen Verfahrens,

- Figur 2: eine Draufsicht auf eine Wabenverbundplatte vor Auflegen der zweiten Holzwerkstoffplatte gemäß einer ersten Ausführungsform,
- Figur 3: eine Draufsicht auf eine Wabenverbundplatte vor Auflegen der zweiten Holzwerkstoffplatte gemäß einer zweiten Ausführungsform,
- Figur 4: eine Draufsicht auf eine Wabenverbundplatte vor Auflegen der zweiten Holzwerkstoffplatte gemäß einer dritten Ausführungsform,
- Figur 5: eine Draufsicht auf eine Wabenverbundplatte vor Auflegen der zweiten Holzwerkstoffplatte gemäß einer vierten Ausführungsform.

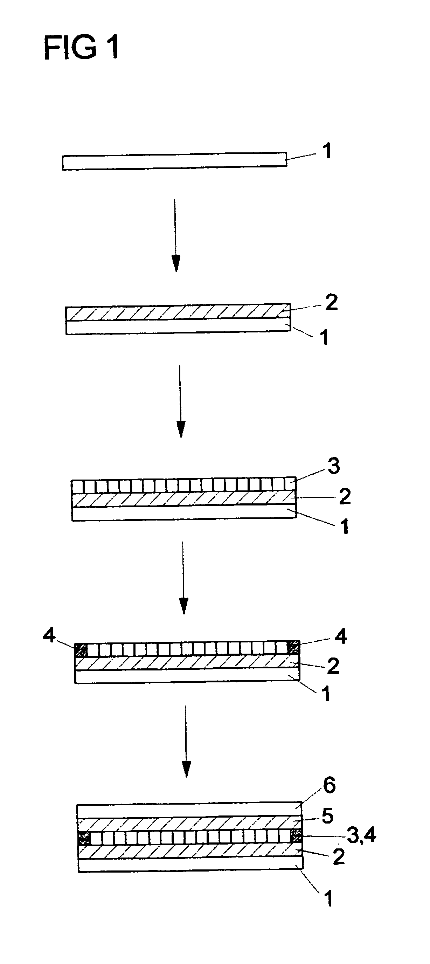

Figur 1 zeigt eine schematische Darstellung der einzelnen Verfahrensschritte des vorliegenden Verfahrens. Zunächst wird eine erste dünne MDF-Platte (1) als erste Decklage auf eine geeignete Unterlage wie z.B. ein Transportband gelegt. Die MDF-Platte (1) kann z.B. die Abmaße 1m x 2m aufweisen. Anschließend wird eine dünne Schicht (2) eines EVA-Klebstoffs als erster Haftvermittler auf die erste Platte (1) aufgetragen. Die Papierwabe (3), die aus einer Vielzahl von hexagonalen einzelnen Zellen aufgebaut ist, wird auf die EVA-Klebstoffschicht (2) aufgelegt und leicht angepresst. Anschließend erfolgt eine Markierung der Zellen (4) z.B. am Rand bzw. Kante der Papierwabe, die als Einsätze für die Befestigungsmittel vorgesehen sind.

Die aus Isocyanat und Polyol bestehende Zusammensetzung wird anschließend in die markierten Zellen (4) eingetragen. Nach erfolgter Aushärtung und Ausbildung des PUR-Schaums wird eine weitere, zweite Schicht aus EVA-Klebstoff (5) auf die freie Oberfläche der teilweise mit dem PUR-Schaum versehenen Papierwabe (3) aufgetragen und abschließend eine zweite dünne MDF-Platte (6) als zweite Decklage auf die Papierwabe aufgelegt. Nach vollständigem Aushärten des PUR-Schaums und des Klebstoffes erfolgt die Konfektionierung der hergestellten Wabenverbundplatte.

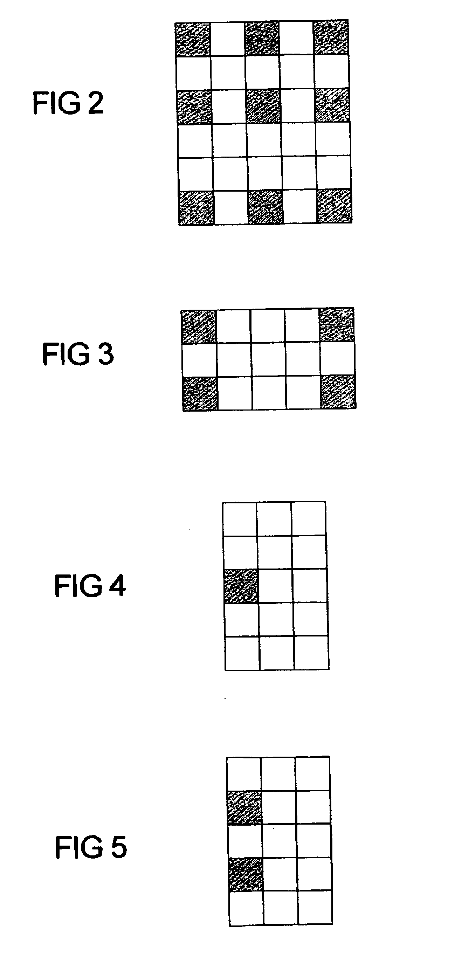

Figuren 2 bis 5 zeigen verschiedene Ausführungsformen des vorliegenden Verfahrens. Diese Ausführungsformen unterscheiden sich insbesondere in Hinblick auf die Positionierung des PUR-Schaumes in der Papierwabe zur Ausbildung von für Befestigungsmittel und andere Elemente geeigneten Einsätzen.

So zeigt Figur 2 eine auf die erste dünne MDF-Platte (1) aufgelegte rechteckige Papierwabe (3), in welcher jeweils Zellen der Papierwabe an den vier Ecken, in der Mitte der Kanten und in der Mitte mit PUR-Schaum ausgefüllt sind.

Figur 3 zeigt eine auf die erste dünne MDF-Platte (1) aufgelegte rechteckige Papierwabe (3), in welcher jeweils Zellen der Papierwabe an den vier Ecken mit PUR-Schaum ausgefüllt sind. Eine solche Wabenverbundplatte ist z.B. zur Verwendung als Tischplatte geeignet. Die vier Einsätze aus PUR-Schaum ermöglichen das Anbringen von Tischbeinen.

In Figur 4 ist eine Wabenverbundplatte vor Auflegen der zweiten MDF-Platte (6) gezeigt, wobei lediglich eine Zelle der Papierwabe (3) -mittig an einer Kante der Papierwabe angeordnet - mit PUR-Schaum ausgefüllt ist. Der durch den PUR-Schaum geformte Einsatz kann z.B. der Aufnahme eines Schlüsselkastens dienen, so dass die hergestellte Wabenverbundplatte als Tür verwendet werden kann.

Figur 5 wiederum zeigt eine Papierwabe (3), wobei lediglich zwei Zellen entlang einer Kante der Papierwabe mit PUR-Schaum ausgefüllt sind. Die Position der Zellen ist bevorzugt so ausgewählt, dass die aus dem PUR-Schaum geformten Einsätze der Aufnahme von Scharnieren z.B. für Schranktüren dienen können.

### Ausführungsbeispiel

Es wird eine HDF- oder Spanplatte mit jeweils einer Dicke von 3mm verwendet. Auf diese werden zunächst 100 bis 120 g eines Harnstoffleims oder Weißleims aufgetragen. Eine Papierwabe wird in einem Umfang von 140 bis 170 g/m² auf der ersten Leimschicht angeordnet. Die Eigenschaften bzw. das Gewicht der verwendeten Papierwabe entspricht einer üblicherweise in der Möbelherstellung verwendeten Papierwabe. Der Schaumvorläufer bzw. die den Kunststoffschaum ausbildende Zusammensetzung wird in die manuell markierten Wabenzellen mittels einer geeigneten Düsenanlage eingetragen.

Nach Aufschäumen und Aushärten des Kunststoffschaums werden weitere 100 bis 120 Harnstoffleim oder Weißleim aufgetragen. Der Leim wird im Falle des Weißleimes entweder auf die Wabe oder die Deckschicht der zweiten Platte aufgetragen. Bei Verwendung von Harnstoffleim wird der Leim auf die Wabe aufgetragen und der Härter wird auf das zweite Deck bzw. Platte aufgebracht.

Anschließend wird eine zweite 3mm Dicke HDF-Platte oder Spanplatte aufgelegt. Der gesamte Verbund wird abschließend bei einem Druck von 4,4 kg/m² und einer Presstemperatur vom 90 bis 110°C verpresst.

## Patentansprüche

1. Verfahren zur Herstellung einer Wabenverbundplatte mit Kunststoffschaumeinsätzen für Befestigungsmittel umfassend die folgenden Schritte:
a) Bereitstellen von mindestens einer ersten Holzwerkstoffplatte,
b) Auftragen einer ersten klebstoffhaltigen Schicht auf mindestens eine Oberfläche der ersten Holzwerkstoffplatte,
c) Auflegen von mindestens einem Wabenkern auf die mit der klebstoffhaltigen Schicht versehene Oberfläche der ersten Holzwerkstoffplatte und Verkleben des Wabenkernes mit der ersten Holzwerkstoffplatte,
d) Einbringen einer einen Kunststoffschaum ausbildende Zusammensetzung ausschließlich in mindestens einen räumlich begrenzten und markierten Bereich des Wabenkerns,
e) Auftragen einer zweiten klebstoffhaltigen Schicht auf die freie Oberfläche des Wabenkerns,
f) Auflegen von mindestens einer zweiten Holzwerkstoffplatte auf die mit der zweiten klebstoffhaltigen Schicht versehene Oberfläche des Wabenkerns, und
g) Aushärten und Konfektionieren der Wabenverbundplatte.

2. Verfahren nach Anspruch 1, **dadurch gekennzeichnet, dass** der mindestens eine markierte Bereich des Wabenkerns zum Einbringen der den Kunststoffschaum ausbildenden Zusammensetzung an den Kanten, den Ecken und/oder in der Mitte des Wabenkerns angeordnet ist.

3. Verfahren nach Anspruch 1 oder 2, **dadurch gekennzeichnet, dass** an mehr als einem markierten Bereich des Wabenkerns die den Kunststoffschaum ausbildende Zusammensetzung eingetragen wird.

4. Verfahren nach einem der vorgehenden Ansprüche, **dadurch gekennzeichnet, dass** der mindestens eine markierte Bereich des Wabenkerns zum Eintragen der den Kunststoffschaum ausbildenden Zusammensetzung mittig an mindestens einer Kante des Wabenkerns und/oder an einer beliebigen anderen Position entlang der mindestens einen Kante des Wabenkerns vorgesehen ist.

5. Verfahren nach einem der vorhergehenden Ansprüche, **dadurch gekennzeichnet, dass** mindestens vier markierte Bereiche des Wabenkerns zum Eintragen der den Kunststoffschaum ausbildenden Zusammensetzung an den jeweiligen Ecken des Wabenkerns vorgesehen sind.

6. Verfahren nach einem der vorhergehenden Ansprüche, **dadurch gekennzeichnet, dass** der mindestens eine markierte Bereich des Wabenkerns zum Eintragen der den Kunststoffschaum ausbildenden Zusammensetzung eine Länge und Breite von jeweils 1 bis 15 cm, bevorzugt 3 bis 10 cm, insbesondere bevorzugt von 5 bis 8 cm aufweist.

7. Verfahren nach einem der vorhergehenden Ansprüche, **dadurch gekennzeichnet, dass** die den Kunststoffschaum ausbildende Zusammensetzung mindestens ein Isocyanat und mindestens ein Polyol umfasst.

8. Verfahren nach einem der vorhergehenden Ansprüche, **dadurch gekennzeichnet, dass** der mindestens eine Wabenkern ein Vielzahl von einzelnen Zellen, bevorzugt in hexagonaler Form aufweist.

9. Verfahren nach einem der vorhergehenden Ansprüche, **dadurch gekennzeichnet, dass** der mindesten eine Wabenkern in Form einer Papierwabe, einer Kartonwabe, einer Aluminiumwabe oder einer aus Kunststoff hergestellten Wabe vorliegt.

10. Verfahren nach einem der vorhergehenden Ansprüche, **dadurch gekennzeichnet, dass** als erste und zweite Holzwerkstoffplatte eine Holzspanlatte oder eine Holzfaserplatte, insbesondere MDF-Platte, verwendet wird.

11. Wabenverbundplatte herstellbar in einem Verfahren nach einem der vorhergehenden Ansprüche umfassend
- mindestens eine erste Holzwerkstoffplatte,
- mindestens eine auf mindestens einer Oberfläche der ersten Holzwerkstoffplatte aufgetragene erste klebstoffhaltige Schicht,
- mindestens einen auf der mit der ersten klebstoffhaltigen Schicht versehenen Oberfläche der ersten Holzwerkstoffplatte angeordneter Wabenkern,
- ausschließlich in räumlich begrenzten, markierten Bereichen des Wabenkerns eingetragener Kunststoffschaum,
- mindestens eine auf der freien Oberfläche des Wabenkerns aufgetragene zweite klebstoffhaltige Schicht, und
- mindestens eine auf der mit der zweiten klebstoffhaltigen Schicht versehenen Oberfläche des Wabenkerns angeordnete zweite Holzwerkstoffplatte.

12. Wabenverbundplatte nach Anspruch 11, **dadurch gekennzeichnet, dass** der mindestens eine markierte Bereich des Wabenkerns umfassend den Kunststoffschaum an den Kanten, den Ecken und/oder in der Mitte des Wabenkerns und der Wabenverbundplatte angeordnet ist.

13. Wabenverbundplatte nach Anspruch 11 oder 12, **dadurch gekennzeichnet, dass** der mindestens eine markierte Bereich des Wabenkerns umfassend den Kunststoffschaum zur Aufnahme von Befestigungsmitteln, Verbindungselementen, Verschlusselementen und anderen geeigneten Elementen dient.

14. Wabenverbundplatte nach einem der Ansprüche 11 bis 13 **gekennzeichnet durch** mindestens ein Kantenband zum Verschließen der Kanten der Wabenverbundplatte umfassend die erste Holzwerkstoffplatte, den in vordefinierten Bereichen mit dem Kunststoffschaum versehen Wabenkerns und die zweite Holzwerkstoffplatte.

15. Verwendung einer Wabenverbundplatte nach einem der Ansprüche 11 bis 14 bei der Herstellung von Inneneinrichtungen wie Möbeln, Türen oder Tischen.

## Claims

1. Method for producing a honeycomb-type composite panel having plastics foam inserts for fastening means, comprising the following steps of:
a) providing at least one first wood panel,
b) applying a first adhesive-containing layer to at least one surface of the first wood panel,
c) placing at least one honeycomb core onto that surface of the first wood panel that is provided with the adhesive-containing layer and adhesively bonding the honeycomb core to the first wood panel,
d) introducing a composition that forms a plastics foam only into at least one spatially delimited and marked region of the honeycomb core,
e) applying a second adhesive-containing layer onto the free surface of the honeycomb core,
f) placing at least one second wood panel onto that surface of the honeycomb core that is provided with the second adhesive-containing layer, and
g) curing and finishing the honeycomb-type composite panel.

2. Method according to Claim 1, **characterized in that** the at least one marked region of the honeycomb core for introducing the composition that forms the plastics foam is arranged at the edges, the corners and/or in the middle of the honeycomb core.

3. Method according to Claim 1 or 2, **characterized in that** the composition that forms the plastics foam is introduced at more than one marked region of the honeycomb core.

4. Method according to one of the preceding claims, **characterized in that** the at least one marked region of the honeycomb core for introducing the composition that forms the plastics foam is provided centrally on at least one edge of the honeycomb core and/or at any other desired position along the at least one edge of the honeycomb core.

5. Method according to one of the preceding claims, **characterized in that** at least four marked regions of the honeycomb core for introducing the composition that forms the plastics foam are provided at the respective corners of the honeycomb core.

6. Method according to one of the preceding claims, **characterized in that** the at least one marked region of the honeycomb core for introducing the composition that forms the plastics foam has a length and width of in each case 1 to 15 cm, preferably 3 to 10 cm, particularly preferably 5 to 8 cm.

7. Method according to one of the preceding claims, **characterized in that** the composition that forms the plastics foam comprises at least one isocyanate and at least one polyol.

8. Method according to one of the preceding claims, **characterized in that** the at least one honeycomb core has a multiplicity of individual cells, preferably in a hexagonal form.

9. Method according to one of the preceding claims, **characterized in that** the at least one honeycomb core is present in the form of a paper honeycomb, a cardboard honeycomb, an aluminium honeycomb or a honeycomb produced from a plastics material.

10. Method according to one of the preceding claims, **characterized in that** a particle board panel or a fibreboard panel, in particular an MDF panel, is used as the first and second wood panel.

11. Honeycomb-type composite panel that is producible in a method according to one of the preceding claims, comprising
- at least one first wood panel,
- at least one first adhesive-containing layer applied to at least one surface of the first wood panel,
- at least one honeycomb core arranged on that surface of the first wood panel that is provided with the first adhesive-containing layer,
- plastics foam introduced only into spatially delimited, marked regions of the honeycomb core,
- at least one second adhesive-containing layer applied to the free surface of the honeycomb core, and
- at least one second wood panel arranged on that surface of the honeycomb core that is provided with the second adhesive-containing layer.

12. Honeycomb-type composite panel according to Claim 11, **characterized in that** the at least one marked region of the honeycomb core comprising the plastics foam is arranged at the edges, the corners and/or in the middle of the honeycomb core and the honeycomb-type composite panel.

13. Honeycomb-type composite panel according to Claim 11 or 12, **characterized in that** the at least one marked region of the honeycomb core comprising the plastics foam serves to receive fastening means, connecting elements, closure elements and other suitable elements.

14. Honeycomb-type composite panel according to one of Claims 11 to 13, **characterized by** at least one edge strip for closing the edges of the honeycomb-type composite panel comprising the first wood panel, the honeycomb core, which is provided in predefined regions with the plastics foam, and the second wood panel.

15. Use of a honeycomb-type composite panel according to one of Claims 11 to 14 in the production of interior equipment such as furniture, doors or tables.

## Revendications

1. Procédé de fabrication d'une plaque composite en nid d'abeille dotée d'inserts en mousse synthétique pour des moyens de fixation, comprenant les étapes suivantes:
a) préparation d'au moins une première plaque en matériau dérivé du bois,
b) dépôt d'une première couche adhésive sur au moins une surface de la première plaque en matériau dérivé du bois,
c) pose d'au moins un noyau en nid d'abeille sur la surface de la première plaque en matériau dérivé du bois munie de la couche adhésive et collage du noyau en nid d'abeille avec la première plaque en matériau dérivé du bois,
d) introduction d'une composition formant une mousse synthétique exclusivement dans au moins une région spatialement limitée et marquée du noyau en nid d'abeille,
e) dépôt d'une deuxième couche adhésive sur la surface libre du noyau en nid d'abeille,
f) pose d'au moins une deuxième plaque en matériau dérivé du bois sur la surface du noyau en nid d'abeille munie de la deuxième couche adhésive, et
g) durcissement et confection de la plaque composite en nid d'abeille.

2. Procédé selon la revendication 1, **caractérisé en ce que** ladite au moins une région marquée du noyau en nid d'abeille destinée à l'introduction de la composition formant la mousse synthétique est disposée sur les bords, dans les angles et/ou au milieu du noyau en nid d'abeille.

3. Procédé selon la revendication 1 ou 2, **caractérisé en ce que** l'on introduit la composition formant la mousse synthétique dans plus d'une région marquée du noyau en nid d'abeille.

4. Procédé selon l'une quelconque des revendications précédentes, **caractérisé en ce que** ladite au moins une région marquée du noyau en nid d'abeille destinée à l'introduction de la composition formant la mousse synthétique est prévue au milieu sur au moins un bord du noyau en nid d'abeille et/ou en une autre position quelconque le long dudit au moins un bord du noyau en nid d'abeille.

5. Procédé selon l'une quelconque des revendications précédentes, **caractérisé en ce qu'**il est prévu au moins quatre régions marquées du noyau en nid d'abeille destinées à l'introduction de la composition formant la mousse synthétique dans les angles respectifs du noyau en nid d'abeille.

6. Procédé selon l'une quelconque des revendications précédentes, **caractérisé en ce que** ladite au moins une région marquée du noyau en nid d'abeille destinée à l'introduction de la composition formant la mousse synthétique présente une longueur et une largeur respectivement de 1 à 15 cm, de préférence de 3 à 10 cm, et de préférence encore de 5 à 8 cm.

7. Procédé selon l'une quelconque des revendications précédentes, **caractérisé en ce que** la composition formant la mousse synthétique comprend au moins un isocyanate et au moins un polyol.

8. Procédé selon l'une quelconque des revendications précédentes, **caractérisé en ce que** ledit au moins un noyau en nid d'abeille présente une multiplicité de cellules individuelles, de préférence de forme hexagonale.

9. Procédé selon l'une quelconque des revendications précédentes, **caractérisé en ce que** ledit au moins un noyau en nid d'abeille se présente sous la forme d'un nid d'abeille en papier, d'un nid d'abeille en carton, d'un nid d'abeille en aluminium ou d'un nid d'abeille fabriqué en matière synthétique.

10. Procédé selon l'une quelconque des revendications précédentes, **caractérisé en ce que** l'on utilise comme première et deuxième plaques en matériau dérivé du bois un panneau de particules ou un panneau de fibres, en particulier un panneau MDF.

11. Plaque composite en nid d'abeille pouvant être fabriquée par un procédé selon l'une quelconque des revendications précédentes, comprenant:
- au moins une première plaque en matériau dérivé du bois,
- au moins une première couche adhésive appliquée sur au moins une surface de la première plaque en matériau dérivé du bois,
- au moins un noyau en nid d'abeille disposé sur la surface de la première plaque en matériau dérivé du bois munie de la première couche adhésive,
- une mousse synthétique introduite exclusivement dans des régions spatialement limitées et marquées du noyau en nid d'abeille,
- au moins une deuxième couche adhésive appliquée sur la surface libre du noyau en nid d'abeille, et
- au moins une deuxième plaque en matériau dérivé du bois disposée sur la surface du noyau en nid d'abeille munie de la deuxième couche adhésive.

12. Plaque composite en nid d'abeille selon la revendication 11, **caractérisée en ce que** ladite au moins une région marquée du noyau en nid d'abeille comprenant la mousse synthétique est disposée sur les bords, dans les angles et/ou au milieu du noyau en nid d'abeille et de la plaque composite en nid d'abeille.

13. Plaque composite en nid d'abeille selon la revendication 11 ou 12, **caractérisée en ce que** ladite au moins une région marquée du noyau en nid d'abeille comprenant la mousse synthétique est utilisable pour recevoir des moyens de fixation, des éléments de liaison, des éléments de fermeture et d'autres éléments appropriés.

14. Plaque composite en nid d'abeille selon l'une quelconque des revendications 11 à 13, **caractérisée par** au moins une bande de bord pour fermer les côtés de la plaque composite en nid d'abeille comprenant la première plaque en matériau dérivé du bois, le noyau en nid d'abeille muni de la mousse synthétique dans des régions prédéfinies et la deuxième plaque en matériau dérivé du bois.

15. Utilisation d'une plaque composite en nid d'abeille selon l'une quelconque des revendications 11 à 14 lors de la fabrication d'équipements intérieurs de meubles, de portes ou de tables.
